# EUROPEAN PATENT APPLICATION

(11) **EP 4 375 320 A1**
(43) Date of publication of application: **29.05.2024**
(21) Application number: 22209429.4
(22) Date of filing: 24.11.2022
(51) Int. Cl.: C08K 3/013, C08K 3/105, C08K 3/26, C08K 3/34, C08K 3/36, C08K 5/098, C08L 1/26, C08L 29/04, B65D 85/00

(54) **WATER-SOLUBLE POLYMER COMPOSITION**

(71) Applicant: B&T Entwicklungs- und Vermarktungsgesellschaft mbH, 22297 Hamburg (DE)
(72) Inventor: LÜHMANN, Bernd, 22844 Norderstedt (DE); LERCH, Alexander, 63571 Gelnhausen (DE)
(74) Representative: Frei Patent Attorneys

(57) **Abstract**

The polymer composition (1) comprises a water-soluble polymer (12) and a salt (3). The polymer composition (1) is non-corrosive to metal. This means, that the polymer composition (1) does not cause corrosion. In particular, the polymer composition (1) does not cause corrosion to the processing machine under processing conditions of the polymer composition (1). Processing conditions of the polymer composition may include elevated temperature in an extrusion process.

## Description

The invention relates to the field of polymer compositions. It relates to a water-soluble polymer composition as described in the preamble of the independent claims.

Polymer compositions are widely used in many technical fields, e.g. packing and in particular food packing. Water-soluble polymer compositions are increasingly demanded for certain applications.

It is therefore an object of the invention to provide a water-soluble polymer composition and a packing comprising the polymer composition.

These objects are achieved by the polymer composition and the packing according to the independent claims.

The polymer composition comprises a water-soluble polymer and a salt. The polymer composition is essentially non-corrosive to metal, in particular the polymer composition is essentially non-corrosive to at least one of steel, aluminium and alloys thereof, ceramic coating. This means, that the polymer composition does not cause corrosion. In particular, the polymer composition does not cause corrosion to the processing machine under processing conditions of the polymer composition. Processing conditions of the polymer composition may include elevated temperature for example in an extrusion process. Polymer composition of the prior comprising salts may have a corrosive effect on the processing machines, as for example polymer compositions comprising sodium chloride.

According to DIN EN ISO 8044 (as of the end of 2021) (formerly DIN 50900) corrosion is defined as follows: "Corrosion is the reaction of a metallic material with its environment, which causes a measurable change in the material (corrosion phenomenon) and can lead to impairment of the function of a component or an entire system (corrosion damage). In most cases, this reaction is electrochemical in nature, but in some cases, it can also be chemical or metal-physical in nature."

The term essentially non-corrosive in this text can mean, that rate of corrosion is less than 0.5 mm/year, in particular less than 10 µm/year, in particular less than 5 µm/year, in particular less than 0.001 mm/year for a steel or aluminium parts being in contact with the polymer composition.

During processing of the polymer composition may also have an abrasive impact on the processing machine. This abrasive effect may depend on filler included in the polymer composition. The abrasive effect can be independent from a corrosion effect. Both effects might occur at the same time.

In embodiments, the polymer composition does not comprise a strong acid or a strong base.

In embodiments, the polymer composition comprises at least one of the following components:
- metal -lactide; lactic acid; lactic acid esters;
- metal -citrate, in particular calcium citrate or sodium citrate; citric acid; citric acid esters;
- metal -malate; malic acid; malic acid esters;
- metal -alginate; alginic acids; alginic acid esters;
- metal -carboxylates of aliphatic short to medium chain acids, in particular linear, branched or cyclic aliphatic acids;
- short to medium carbon chain acids, corresponding salts of short to medium carbon chain acids and derivatives thereof, in particular linear, branched or cyclic carbon chain acids;
- ascorbic acid and/or its corresponding salt;
- succinic acid and/or its corresponding salt;
- sodium sulfate, sodium bisulfate (also known as sodium hydrogen sulfate).

In case of a polyvalent acid it is possible that only a partial substitution of the acidic protons by counter ions is present.

The metal to be used as a metal ion of the salt can be at least one of alkali metal, alkaline earth metal and aluminium, in particular Na, K, Ca, Mg, Al, and/or a mixture thereof.

In embodiments, the salt comprises at least one of the following components:
- phosphoric acid and derivatives thereof, in particular at least partially neutralized phosphoric acid, containing metal salts and/or in particular at least partially esterified phosphoric acid, for example phosphates;
- Ca-silicates.

In case of a compostable, in particular bio-compostable, polymer composition the phosphate can be utilised as fertiliser.

In embodiments, the polymer composition, in particular the salt, is non-toxic. This enables the usage of the polymer composition in connection with foods. In particular the polymer composition and/or the salt is non-toxic to human, in particular the polymer composition and/or the salt is recognized as safe in food industry.

In embodiments, the polymer composition is a food contact material. This means that the polymer composition is allowed to have contact with food, e.g. in food packaging. The contact of the polymer composition with food does not have any disadvantages for the food and/or the consumer.

In embodiments, the polymer composition comprises at least one of the following components:
- a salt of an organic acid;
- an organic acid;
- an organic acid ester.

The salt of the organic acid can be the salt of the polymer composition, as described above. The organic acid can be the conjugated acid of an organic salt comprised in the polymer composition. The organic acid ester can be an ester derived from an organic acid.

In embodiments, the salt is an organic salt of an organic acid. The salt can be derived from at least one of lactic acid, citric acid, malic acid, alginic acids, aliphatic short to medium chain acids, ascorbic acid, succinic acid.

In embodiments, partially or fully neutralized acids may be used as salt. In case of polyfunctional acids, like citric acid or esters of the same, with at least one metal cation may be used.

In embodiments, the polymer composition is a food contact material. This means that the polymer composition can have contact with food, e. g. in food packaging. The contact of the polymer composition with food does not have any disadvantages for the food and/or the consumer.

In embodiments, the water-soluble polymer is at least one of poly(vinyl alcohol) (PVOH), cellulose-ether polymer, Butenediol-Vinylalcohol-Copolymer (BVOH), and Ethylene-Vinylalcohol-Copolymers (EVOH).

In embodiments, the polymer composition fulfils at least one of the following conditions:
- the salt comprises a salt of alkaline metal, earth alkaline metal, aluminum containing salt and/or a mixture thereof;
- the polymer composition comprises at least 1 wt%, in particular at least 2 wt%, of the salt;
- the polymer composition comprises 1-50 wt%, in particular 1-40 wt%, in particular 2-30 wt%, of the salt;
- the polymer composition comprises a vinyl-alcohol copolymer comprising 0.5 mol% to 20 mol% of a non-OH group containing comonomer, in particular at least 1 mol % of a non-OH group containing comonomer;
- the polymer composition comprises an inorganic filler;
- the polymer composition comprises an organic filler;
- the polymer composition comprises a minimum of 35 wt% of one or more respective vinyl alcohol rich copolymers.

The inorganic filler can be at least one of clay mineral and layered silicate, in particular bentonite, montmorillonite, to name only a very few.

The inorganic filler can be a single metal or mixed metal carbonate, in particular calcium carbonate including precipitated calcium carbonate. The inorganic filler can be a silica, in particular fumed silica.

The organic filler can be cellulose, cellulose derivatives like cellulose esters, cellulose ethers etc., lignocellulose and/or a mixture thereof, in particular low molar mass oligomers of the same. Cellulose and Cellulose derivatives can be based on nanocellulose. The organic filler can be starch and starch derivatives, in particular low molar mass oligomers of the same. The organic filler can be Chitin, Chitosan and derivatives thereof. The organic filler can be coffee silverskin.

In embodiments, the polymer composition is at least one of bio-degradable and compostable, in particular home compostable. In the present text, "bio-degradable" may mean biologically degradable according to the European standard EN 13432 (as of the end of 2021). In addition, or as an alternative, it may mean biologically degradable according to the European standard EN 14995 (as of the end of 2021). Thus "bio-degradable" especially refers to "biologically degradable according to EN 13432 and/or according to EN 14995". As far as in the present text water-soluble polymers are mentioned, such water-soluble polymer may optionally be (bio-)degradable in sewage treatment plants (aerobic biodegradability) in accordance with EN ISO 9888 (as of the end of 2021); determined in accordance with the so-called Zahn-Wellens test, in particular at 20°C.

Bio-degradation in the context of this text means the breakdown of the polymer by microorganisms. Bio-degradability means that an organic material must have degraded to more than 90 percent to water, carbon dioxide (CO2) and biomass and maybe mineral salts after a specified time under defined specific temperature, oxygen and humidity conditions in the presence of microorganisms or fungi.

The term compostable refers to a bio-degradation under specific conditions.

In order for the polymer composition to be compostable, at least the following conditions can be fulfilled:
- at least 90% of the organic material must be verifiably bio-degraded in CO2 within 6 months;
- after 3 months of composting and subsequent screening through a 2 mm mesh sieve, no more than 10% residue of the original mass may remain;
- there must be no negative effects on the composting process in general;
- no negative effect of the resulting composts on plant growth (agronomic test) and/or ecotoxicity test;
- the maximum concentration of heavy metals (Cu, Zn, Ni, Cd, Pb, Hg, Cr, Mo, Se, As) and florins must not be exceeded.

During composting the polymer composition can be decomposed. The polymer composition can be composted and/or decomposed in a short time to carbon dioxide (CO2) and water (H2O) and biomass.

The polymer composition can be industrial and/or home compostable. The home compostability may not negatively influence the industrial composting process.

In the present text, "compostable" or "home compostable" means compostable or home compostable according to the European standard EN 13432 (as of the end of 2021) for packaging and/or according to the European standard EN 14995 (as of the end of 2021) for plastics/synthetic materials. Compostable materials are always bio-degradable, but not necessarily vice versa, meaning not all bio-degradable materials are compostable.

In embodiments, the polymer composition can comprise at least one additive. The additive can be selected from at least a plasticizer, a stabilizer and a processing aid.

The plasticizer can be a liquid or a solid. The plasticizer can be partially or fully soluble in the base polymer. The plasticizer can be hygroscopic. The plasticizer may be selected from the group consisting of polyols (oligo- and polyhydroxy compounds), low molecular weight amides, in particular of triols, diols, polymeric-triols, polymeric-diols, for example glycerine, ethylene glycol, propylene glycol, di- and triethylene glycol, di- and tripropylene glycol, further lower molecular weight polyethylene glycols and polypropylene glycols and their monoalkyl ethers; and lower molecular weight amides. In certain embodiments, the plasticizer may be selected from the group consisting of di-propylene glycol, higher oligomers of ethylene glycol or propylene glycol, butylene glycol, glycerol, pentaerythritol, sorbitol, 1,4-Monoanhydrohexitols, 1,4-3,6-dianhydrohexitols as well as esters of the same. Preferred plasticizers are glycerine, and polypropylene glycol. Glycerine or another plasticizer may be present in an amount of between 2% and 25%, especially between 5% and 18%.

The salt can be provided in a higher percentage by weight than the plasticizer. The ratio of salt to plasticizer can be 1.25-12:1, in particular 1.25-7:1, in particular 1.4-5-5:1, in particular 4-5:1.

The stabilizer can be a primary antioxidant, a secondary antioxidant, in particular a phosphite, thio-ester and/or C-radical scavenger. The stabilizer can be a UV-stabilizer. It can be applied for stabilization during processing and/or storage and/or use.

In embodiments, the salt does not form a strong acid in connection with water. This enables the stabilization of the polymer composition when in contact with water. For example, packaging comprising the polymer composition does not form a strong acid when in contact with condensation water from the packed goods.

The polymer composition can be used for packaging, in particular for food packaging, in particular for packaging coffee.

In an embodiment a packaging comprises the polymer composition as described.

Further preferred embodiments are evident from the dependent patent claims. Features of the method claims may be combined with features of the device claims and vice versa.

While the invention has been described in present preferred embodiments of the invention, it is distinctly understood that the invention is not limited thereto, but may be otherwise variously embodied and practised within the scope of the claims.

A polymer composition 1 comprising a water-soluble polymer composition 12 and a salt 3. The polymer composition 1 is non-corrosive to metal. The water-soluble polymer composition 12 comprises poly vinyl alcohol (PVOH).

The salt comprises a malate (salt of the malic acid).

The polymer composition 1 is non-toxic to enable the risk-free contact with food during use of the polymer composition 1 in food packaging. The packaging comprising the polymer composition 1 can be bio-degradable and/or compostable. This increases the ecological value of the packaging.

The non-corrosive properties of the polymer composition 1 enable an easy handling of the polymer composition 1 during processing, such as extrusion.

## Claims

1. A polymer composition (1) comprising a water-soluble polymer composition (12) and a salt (3),
wherein the polymer composition (1) is non-corrosive to metal.

2. The polymer composition (1) according to claim 1, wherein the polymer composition (1) comprises at least one of the following components:
- metal -lactide; lactic acid; lactic acid esters;
- citric acid; citric acid esters;
- metal -malate; malic acid; malic acid esters;
- metal -alginate; aliginic acids; alginic acid esters;
- metal -carboxylates of aliphatic short to medium chain acids;
- short to medium carbon chain acids;
- ascorbic acid and/or its corresponding salt;
- succinic acid and/or its corresponding salt;
- sodium sulfate, sodium hydrogen sulfate.

3. The polymer composition (1) according to any of claims 1 to 2, wherein the polymer composition (1) comprises at least one of the following components:
- phosphates;
- Ca-silicates.

4. The polymer composition (1) according to any of claims 1 or 3, wherein the polymer composition (1), in particular the salt, is non-toxic.

5. The polymer composition (1) according to any of claims 1 to 4, wherein the polymer composition (1) comprises at least one of the following components:
- a salt of an organic acid;
- an organic acid;
- an organic acid ester.

6. The polymer composition (1) according to any of the previous claims, wherein the polymer composition (1) is a food contact material.

7. The polymer composition (1) according to any of the previous claims, wherein the water-soluble polymer is at least one of poly(vinyl alcohol) (PVOH), cellulose-ether polymer, Butenediol-Vinylalcohol-Copolymer (BVOH), and Ethylene-Vinylalcohol-Copolymers (EVOH).

8. The polymer composition (1) according to any of previous claims, wherein the polymer composition (1) fulfils at least one of the following conditions:
- the salt comprises a salt of alkaline metals, earth alkaline metals, aluminum containing salt and/or a mixture thereof;
- the polymer composition (1) comprises at least 1 wt%, in particular at least 2 wt%, of the salt;
- the polymer composition (1) comprises 1-50 wt%, in particular 1-40 wt%, in particular 2-30 wt%, of the salt;
- the polymer composition (1) comprises a vinyl-alcohol copolymer comprising 1 to 20 mol% of a non-OH group containing comonomer;
- the polymer composition (1) comprises an inorganic filler;
- the polymer composition (1) comprises an organic filler;
- the polymer composition (1) comprises a minimum of 35 wt% of one or more respective vinyl alcohol rich copolymers.

9. The polymer composition (1) according to any of the previous claims, wherein the polymer composition (1) is at least one of bio-degradable and compostable, in particular home compostable.

10. Use of a polymer composition (1) according to any one of the previous claims for packing, in particular for food packing, in particular for packing coffee.

11. Packaging comprising a polymer composition (1) according to claims 1-9.
